# EUROPEAN PATENT APPLICATION

(11) **EP 4 380 153 A1**
(43) Date of publication of application: **05.06.2024**
(21) Application number: 22306754.7
(22) Date of filing: 29.11.2022
(51) Int. Cl.: H04N 19/119, H04N 19/167, H04N 19/179, H04N 19/70

(54) **ENCODING/DECODING VIDEO PICTURE DATA USING PICTURE TILES**

(71) Applicant: Beijing Xiaomi Mobile Software Co., Ltd., Beijing 100085 (CN)
(72) Inventor: Potetsianakis, Emmanouil, 2563 TZ, The Hague (NL); Thomas, Emmanuel, 2611WD, Delft (NL)
(74) Representative: RVDB Rennes

(57) **Abstract**

The present application relates to encoding/decoding a video picture (PC1) with picture tiles (TL). A method for encoding the video picture comprises: spatially segmenting the video picture (PC1) into a plurality of picture tiles (TL) having no intra-frame dependency; writing, in a metadata structure, section metadata of at least one spatial section (SP), each spatial section comprising at least one picture tile (TL) of the video picture (PC1), the section metadata of each spatial section (SP) defining decoding properties of video picture data of said at least one picture tile (TL) of the spatial section (SP); and encoding video picture data of the at least one picture tile (TL) of said at least one spatial section (SP) according to the section metadata of the at least one spatial section.

## Description

### FIELD

The present application generally relates to video picture encoding and decoding. Particularly, but not exclusively, the technical field of the present application is related to encoding video picture data of picture tile(s) of a video picture, decoding such encoded video picture data and corresponding encoding and decoding devices.

### BACKGROUND

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

It is known to perform streaming of video content for full or partial consumption (or access) by user applications (or users) of different specifications. Currently, video streaming can be achieved either by using scalable video coding (SVC), that requires dedicated system architecture, or by separating before delivery the full-resolution video in tiles.

However, video encoding and decoding based on picture tiles are currently not satisfactory and are not sufficiently efficient. In particular, once video content has been downloaded, an encoder may be enabled to decode the received video content, this leading to a poor quality of service and inconvenience to the user. This is because even in cases where video content contains picture tiles, the encoder may not be able to decode the video content for partial consumption. Resources in terms for instance of treatment and bandwidth may thus be wasted and the user experience may be limited.

There is thus a need for encoding and decoding techniques ensuring encoding and/or decoding efficiency for a video picture. In particular, there is a need for an efficient encoding and/or decoding technique allowing flexibility in the way a video picture (a video stream for instance) is accessed, for instance for the purpose of full or partial consumption by a client or user application.

At least one exemplary embodiment of the present application has been devised with the foregoing in mind.

### SUMMARY

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method of method of encoding a video picture, the method comprising:
- spatially segmenting the video picture into a plurality of picture tiles having no intra-frame dependency;
- writing, in a metadata structure, section metadata of at least one spatial section, each spatial section comprising at least one picture tile of the video picture, the section metadata of each spatial section defining decoding properties of video picture data of said at least one picture tile of the spatial section; and
- encoding, into a container, video picture data of the at least one picture tile of said at least one spatial section according to the section metadata of the at least one spatial section.

According to a second aspect of the present application, there is provided a method of decoding a video picture implemented by a media player, said video picture being segmented into a plurality of picture tiles having no intra-frame dependency, said method comprising:
- reading, from a metadata structure, section metadata of at least one spatial section, each spatial section comprising at least one picture tile of the video picture, the section metadata of each spatial section defining decoding properties of video picture data of said at least one picture tile of the spatial section;
- determining a supported spatial section by comparing the section metadata of said at least one spatial section to decoding capabilities of the media player; and
- decoding, from a first container, video picture data of at least one picture tile of said supported spatial section

In an exemplary embodiment, the section metadata of said at least one spatial section defines a spatial area in the video picture.

In an exemplary embodiment, the spatial area is defined, by the section metadata, based on at least one picture tile of the video picture.

In an exemplary embodiment, the spatial area is defined by the section metadata of said at least one spatial section based on at least one dimension of said spatial section and a reference point indicating a position of said spatial section relative to the picture tiles of the video picture.

In an exemplary embodiment, at least part of the metadata structure is comprised in a descriptor file separate from, and referring to, the first container.

In an exemplary embodiment, the descriptor file is a media presentation descriptor.

In an exemplary embodiment, the descriptor file defines location of one or more second containers including said first container.

In an exemplary embodiment, the descriptor file defines the section metadata and location of one or more picture tiles of said at least one spatial section.

In an exemplary embodiment, at least part of the metadata structure is comprised in the first container.

In an exemplary embodiment, the section metadata is comprised in at least one of:
- in a bitstream transformation descriptor incorporated into the first container; and
- in metadata information of the first container.

In an exemplary embodiment, a first part of the metadata structure is comprised in a descriptor file separate from, and referring to, the first container,
said first part of the metadata structure comprising a flag indicating the existence of said at least one spatial section within said video picture,
wherein a second part of the metadata structure is comprised in the first container.

In an exemplary embodiment, the decoding properties of the section metadata define at least one codec parameter for decoding said at least one at least one spatial section.

In an exemplary embodiment, the section metadata comprise at least one of:
- an identifier of said at least one spatial section;
- tile information indicating at least one picture tile of said at least one spatial section;
- a resolution of said at least one spatial section;
- area information defining the spatial area occupied by said at least one spatial section; and
- ratio information defining an aspect ratio of said at least one spatial section.

In an exemplary embodiment, the first container is an ISO BMFF file.

According to a third aspect of the present application, there is provided a container formatted to include encapsulated data obtained from a method according to the first aspect of the present application.

According to a fourth aspect of the present application, there is provided an apparatus comprising means for performing one of the methods according to the first and/or second aspect of the present application.

According to a fifth aspect of the present application, a computer program product including instructions which, when the program is executed by one or more processors, causes the one or more processors to carry out a method according to the first and/or second aspect of the present application.

According to a sixth aspect of the present application, there is provided a non-transitory storage medium (or storing medium) carrying instructions of program code for executing any one of the methods according to the first and/or second aspect of the present application.

The present application provides encoding and decoding techniques ensuring encoding and/or decoding efficiency for a video picture. In particular, efficient encoding and/or decoding technique can be achieved by allowing flexibility in the way a video picture (a video stream for instance) is accessed, for instance for the purpose of full or partial consumption by a client or user application. Waste of resources and inconvenience to the user can also be limited or avoided thanks to the present invention.

The specific nature of at least one of the exemplary embodiments as well as other objects, advantages, features and uses of said at least one of exemplary embodiments will become evident from the following description of examples taken in conjunction with the accompanying drawings.

### BRIEF DESCRIPTION OF THE DRAWINGS

Reference will now be made, by way of example, to the accompanying drawings which show exemplary embodiments of the present application, and in which:
**Figure 1** schematically shows a video picture be divided into slices in accordance with an example of the prior art;
**Figure 2** schematically shows the slices slice boundaries of a video picture in accordance with an example of the prior art;
**Figure 3** schematically shows a video picture for encoding according to at least one particular exemplary embodiment of the present application;
**Figure 4** schematically shows a video picture spatially segmented into picture tiles and comprising a spatial section according to at least one particular exemplary embodiment of the present application;
**Figures 5** and **6** schematically shows a video picture spatially segmented into picture tiles and comprising spatial sections according to particular exemplary embodiments of the present application;
**Figures 7** and **8** schematically show video pictures spatially segmented into picture tiles and comprising a spatial section with various aspect ratios, according to particular exemplary embodiments of the present application;
**Figure 9** shows a schematic block diagram of steps of a method of encoding a video picture according to at least one particular exemplary embodiment of the present application;
**Figure 10** schematically shows a video picture spatially segmented into picture tiles and comprising a spatial section according to at least one particular exemplary embodiment of the present application;
**Figures 11-13** show schematic block diagrams of ISO BMFF files according to particular exemplary embodiments of the present application;
**Figure 14** shows a schematic block diagram of steps of a method of decoding a video picture according to at least one particular exemplary embodiment of the present application;
**Figure 15** shows a schematic block diagram of steps of a method of decoding a video picture according to at least one particular exemplary embodiment of the present application; and
**Figure 16** illustrates a schematic block diagram of an example of a system in which various aspects and exemplary embodiments are implemented.

Similar or same elements are referenced with the same reference numbers.

### DESCRIPTION OF EXEMPLARY EMBODIMENTS

As indicated earlier, video streaming may be achieved either by using scalable video coding, that requires dedicated system architecture, or by separating before delivery the full-resolution video in picture tiles. However, it has been observed that if the picture tiles are not separated (or formed) before delivery, there is a risk that the client will not be aware of the existence of those picture tiles, or the suitability of those tiles for partial consumption, without first downloading and analyzing the video content. There is a risk that a client will not download a video content based on the wrong assumption that it will be unable to decode and read the content, this because the client does not know that said content can be partially decoded. Further, if a client downloads a video content (e.g., a video stream) hoping to extract therefrom picture tiles for use during decoding, decoding may fail, either because relevant picture tiles cannot be successfully extracted or because the video content is not encoded in an appropriate manner, thereby giving rise to a waste of processing resources, bandwidth and time; even if the decoding succeeds the tile segmentation might be done is such a way that the actual content of the tile(s) is not suitable for (partial) consumption. The video content may indeed require to be encoded in a specific manner to allow full or partial decoding.

The present application thus provides various aspects of an encoding/decoding technique for encoding/decoding a video content such as a video stream, or more generally one or more video pictures, comprising picture tiles. An aspect of this technique relies in particular on a new signalling operation that informs the client about the existence of picture tiles and their decoding requirements, so that these information elements can be accessed prior to the delivery of the video stream containing those picture tiles. In particular, signalling for streaming of a video picture can be made to indicate at least one spatial section of a video picture and associated decoding properties. This signalling may for instance indicate spatial sections of different decoding properties.

This approach may facilitate for instance use cases where a video content is downloaded but consumed only partially (i.e., in a lower resolution - by leaving out at least one part of the frame), in a content-agnostic way. Partial consumption (or partial access) of video content may be achieved by decoding only one or more plural areas, called spatial sections, of a video picture. In other terms, sub-part(s) of the video picture corresponding to spatial section(s) thereof may be decoded while letting other part(s) aside. The part of a video frame that is decoded may also be called a derivative frame.

The technique of the present application allows in particular signalling support of spatial sections for decoding video picture data, the presence of picture tiles in the video picture data (e.g., in a bitstream) as well as decoding properties (e.g., compliance point(s), such as profile, tier and/or level) that can be used for the purpose of decoding the video picture data.

At least one of the exemplary embodiments is more fully described hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the scope of the present application.

At least one of the aspects generally relates to video picture encoding, another aspect generally relates to transmitting a metadata structure comprising section metadata and one other aspects relates to decoding encoded video picture data using such section metadata.

At least one of the exemplary embodiments is described for encoding/decoding a video picture but extends to the encoding/decoding of video pictures (sequences of pictures) because each video picture may be sequentially encoded/decoded as described below.

Moreover, the at least one exemplary embodiments are not limited to MPEG standards such as AVC (ISO/IEC 14496-10 Advanced Video Coding for generic audio-visual services, ITU-T Recommendation H.264, https://www.itu.int/rec/T-REC-H.264-202108-P/en), EVC (ISO/IEC 23094-1 Essential video coding), HEVC (ISO/IEC 23008-2 High Efficiency Video Coding, ITU-T Recommendation H.265, https://www.itu.int/rec/T-REC-H.265-202108-P/en, VVC (ISO/IEC 23090-3 Versatile Video Coding, ITU-T Recommendation H.266, https://www.itu.int/rec/T-REC-H.266-202008-I/en) but may be applied to other standards and recommendations such as AV1 (AOMedia Video 1, http://aomedia.org/av1/specification/) for example. The exemplary embodiments of the application as described in the present disclosure may apply to pre-existing or future-developed, and extensions of standards and recommendations. Unless indicated otherwise, or technically precluded, the aspects described in the present application may be used individually or in combination.

A number of definitions and observations applying to the present application are now provided here-below.

A video picture (or image) may be a video frame belonging to a video, i.e. a temporal sequence of video frames. A temporal relationship exists between the video frames of a video.

A video picture (or image) may also be a still image.

In the following, exemplary embodiments of the present application are discussed by considering a video picture (or an image) as being either a still image or a video frame of a video.

An image comprises at least one component (also called channel) determined by a specific picture/video format which specifies all information relative to samples values and all information which may be used by a display unit and/or any other device to display and/or to decode image data related to said image in order to generate pixel values.

An image comprises at least one component usually expressed in the shape of an 2D array of samples.

An image may be a monochrome or a color image. A monochrome image comprises a single component and a color image (also denoted texture image) may comprise a plurality of components, such as three components.

For example, a color image may comprise a luma (or luminance) component and two chroma components when the image/video format is the well-known (Y,Cb,Cr) format or may comprise three color components (one for Red, one for Green and one for Blue) when the image/video format is the well-known (R,G,B) format.

Each component of an image may comprise a number of samples relative to a number of pixels of a display screen on which the image is intended to be displayed. For instance, the number of samples comprised in a component may be the same as, or a multiple (or fraction) of, a number of pixels of a displaying surface on which the image is intended to be displayed.

The number of samples comprised in a component may also be a multiple (or fraction) of a number of samples comprised in another component of a same image.

For example, in the case of a image/video format comprising a luma component and two chroma components like the (Y,Cb,Cr) format, dependent on the color format considered, the chroma component may contain half the number of samples in width and/or height, relative to the luma component.

A sample is the smallest visual information unit of a component composing an image. A sample value may be, for example a luma or chroma value or a colour value of the red, green or blue component of a (R, G, B) format.

A pixel value of a displaying surface may be represented by one sample for monochrome image and by multiple co-located samples for color image. Co-located samples associated with a pixel mean samples corresponding to the location of a pixel in the display screen.

It is common to consider an image (or video picture) as being a set of pixel values, each pixel being represented by at least one sample.

In the following, exemplary embodiments of the present application are discussed by considering picture tiles compliant with HEVC standard (ISO/IEC 23008-2 High Efficiency Video Coding (HEVC) / ITU-T Recommendation H.265). The concept of the present may however apply in an analogous manner to other codecs, in particular any codec that supports coding structures with any intra-frame dependencies, e.g., VVC standard (ISO/IEC 23090-3 Versatile Video Coding (VVC) / ITU-T Recommendation H.266).

Each video picture coded according to HEVC may be partitioned into Coded Tree Blocks (CTBs). More coarsely, each video picture may be partitioned in slices and tiles. A slice is sequence of one or more slice segments starting with an independent slice segment and containing all subsequent dependent slice segments (if any) that precede the next independent slice segment (if any) within the same picture. A slice segment is a sequence of CTUs (coding tree units). Likewise, a tile is a sequence of CTUs.

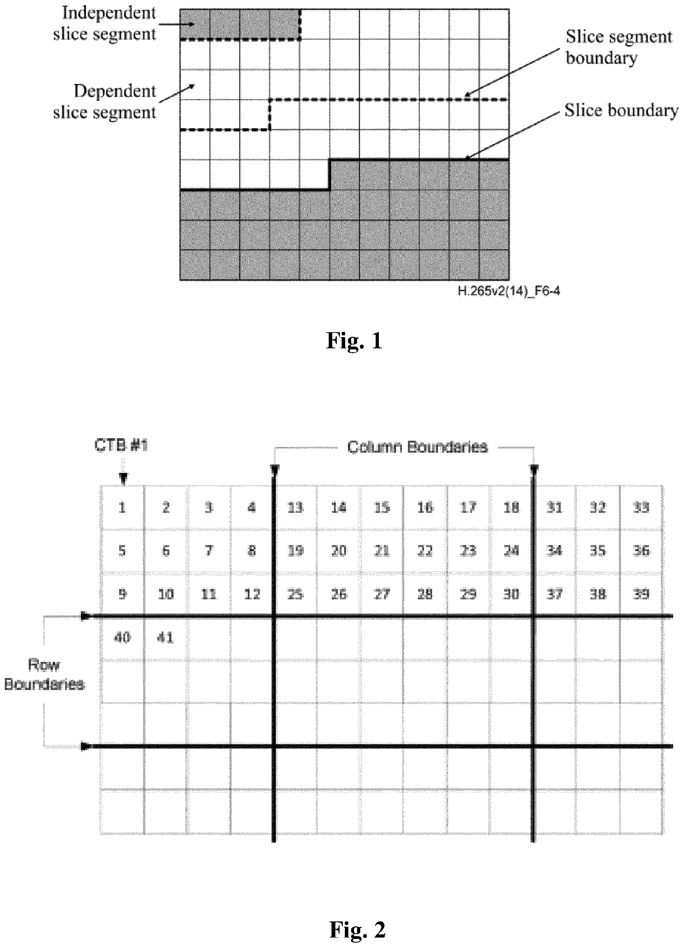

For example, a video picture may be divided into two slices as schematically illustrated in **figure 1****.** In this example, the first slice is composed of an independent slice segment containing 4 CTUs, a dependent slice segment containing 32 CTUs and another dependent slice segment containing 24 CTUs; and the second slice consists of a single independent slice segment containing the remaining 39 CTUs of the video picture.

As schematically illustrated in **figure 2** by way of an example, all the CTBs of the video picture are within slices, and the slice boundaries are always aligned with CTB boundaries. These CTBs form rows and columns that can be grouped in rectangular regions called picture tiles, or more simply tiles. Tile boundaries are always aligned with CTB boundaries. However, slice boundaries may not be always aligned with tile boundaries.

Additionally, tile boundaries indicate a break in coding dependencies, including motion vector prediction, intra prediction and context selection. The only dependency exception may be In-loop filtering that can be disabled to make decoding of a tile completely independent.

In the following, the exemplary embodiments of the present application which are discussed use the scalable extension of HEVC (SHVC - Annex H). However, the concept of the present application may apply to other codes, such as any codec that supports scalable video coding mechanisms, e.g., AVC standard (ISO/IEC 14496-10 Advanced Video Coding (AVC) / ITU-T Recommendation H.264), with its respective scalable extension (SVC).

In scalable video coding, the encoding process produces (at least) two coded output streams. One is considered to be the "base layer" that contains a coded video with specifications targeting low-end devices and one (or more) "enhancement layers" that can be decoded and combined with the base layer to produce a higher quality output. Each layer has different characteristics and can even be created using different, yet compatible, codecs.

Two decoders may be used to produce the final (enhanced) output, which can be a significant limitation, especially if the base layer is encoded in a lower-complexity codec (like AVC in the example), yet it may be required since reconfiguring during runtime a single decoder to decode two different codec bitstreams can be extremely computationally expensive (if possible at all) and this can thus constitute a severe limitation for use cases where the enhanced output is expected to be the most used.

In the following, the exemplary embodiments of the present application which are discussed uses the Dynamic Adaptative Streaming over HTTP (DASH) (see ISO/IEC 23009-1 Dynamic adaptive streaming over HTTP (DASH) - Part 1: Media presentation description and segment formats). However, the concept of the present application may apply to other streaming protocols, such as any codec that any streaming protocol that supports multiple representations of the video content, e.g., HTTP Live Streaming (HLS).

DASH uses the Media Presentation Descriptor (MPD) to inform the client about the coding characteristics of the media content prior to download, thus enabling the client to select for download the media content with the most suitable characteristics. The principles are the same for any other file/descriptor that holds the coding characteristics of the media content, like the Session Description Protocol (SDP), for example.

A video picture can be encoded in multiple resolutions and bitrates to facilitate treatment by various devices, applications and network requirements. Additionally, a video picture can be temporally split in segments to enable transitions between resolutions and bitrates at the segment boundaries. The information containing the source and properties of the video content can be stored in a file used as reference by the client called, in the case of DASH, the Media Presentation Description (MPD).

In an MPD, the video content is contained in one or more period elements that indicate temporal grouping. A period can contain multiple adaptation sets, each of them indicating a media type content of a different type (e.g., one adaptation set for video encoded in AVC and one for HEVC). Then, each adaptation set may contain multiple representations, where each representation may differentiate in terms of content resolution, bitrate, framerate etc.

In the following exemplary embodiments of the present application, the tiles and adaptive streaming technologies may be advantageously combined in order to provide tiled-based adaptive streaming capabilities. To this end, a video picture may be split in tiles, which can then be made available for streaming and/or decoding.

In the following exemplary embodiments of the present application, the scalable video coding and adaptive streaming technologies may be advantageously combined in order to provide video bitstreams coded with a scalable scheme via adaptive streaming platforms. Adaptive streaming of scalable video coding enables devices with low capabilities to consume video encoded content that can be also consumed in higher quality by more powerful devices.

It has been observed that the SHVC (in DASH and general streaming of scalable video coding) does not provide satisfactory results, in particular in terms of encoding/decoding efficiency as it requires preparation of (at least) two separate streams (the base and the enhancement layer). Further, if non-SHVC content is desired, another (third) version of the content should be prepared and stored. Still further, if the base layer is using a different codec than that enhancement layer, two decoders should be used on the client side. For decoding, SHVC decoders are usually based on two internal decoders (one for the base and one for the enhancement layer) which makes the coordination and the synchronisation difficult and resource consuming for the device.

As indicated earlier, an aspect of the present application relies on signalling or indicating to a client (or decoder) that a video picture comprises at least one spatial section that can be consumed (or decoded) independently. Each spatial section may comprise at least one picture tile of the video picture. As described further below in particular embodiments, encoding according to the present application may imply spatially segmenting (or spatially partitioning) a video picture into a plurality of picture tiles having no intra-frame dependency. Various examples of such a tile partitioning are provided herebelow for illustrative purpose only.

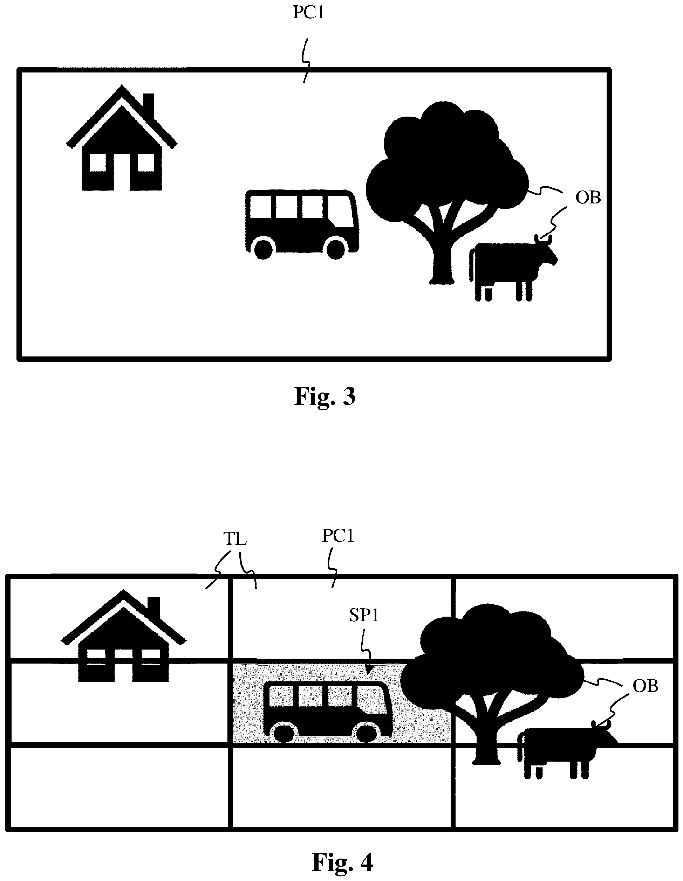

**Figure 3** schematically shows a video picture PC1 which may be encoded and/or decoded according to exemplary embodiments of the present application. In this example, the video picture PC1 may be of various nature as already indicated, and may comprise for instance at least one graphic object OB.

**Figure 4** schematically shows an exemplary embodiment where the video picture PC1 is spatially segmented into 9 picture tiles TL. In this example, the central picture tile forms a spatial section SP1, that is, a spatial area of the video picture PC1. This spatial section SP1 may represent the main content of the video picture PC1, that is, what may be considered as the most important (or more useful) content of the video picture PC1. More generally, the spatial section SP1 may represent any content of interest, i.e., any sub-portion of the video picture PC1. The way the spatial section SP1 is defined within the video picture PC1 may vary depending on each case and may be adapted in particular by a user.

In the particular example of figure 4, the spatial section SP1 corresponds to one picture tile TL, although other embodiments are possible where a spatial section may comprise more than one picture tiles TL.

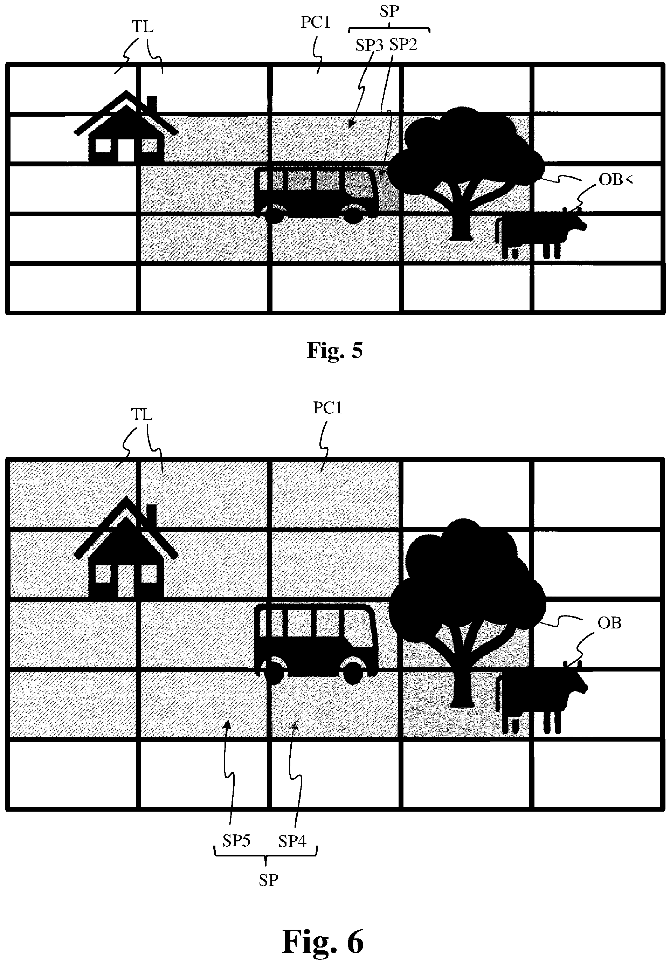

The video picture PC1 may comprise a plurality of spatial sections. **Figure 5** shows an exemplary embodiment where the video picture PC1 is spatially segmented into 25 picture tiles TL. As illustrated, a plurality of spatial section SP, namely spatial sections SP2 and SP3 in this example, may be defined within the video picture PC1. The spatial section SP2 corresponds to a central picture tile while the spatial section SP3 corresponds to 9 picture tiles TL including the one of spatial section SP2.

In the example of figure 5, the smaller spatial section SP2 is part of the larger spatial section SP3, although other embodiments are possible. Each picture tile TL of a spatial section SP are not necessarily included in the larger spatial section(s).

**Figure 6** schematically shows an exemplary embodiment where the video picture PC1 is spatially segmented into 25 picture tiles TL as in figure 5. In this case, two partially-overlapping spatial sections SP4 and SP5 are defined within the video picture PC1. The spatial section SP4 corresponds to 4 picture tiles TL while the spatial section SP corresponds to 12 picture tiles TL. As can be seen, only two picture tiles of the spatial section SP4 is part of (common with) the spatial section SP5.

It should be noted that a spatial section SP of the video picture PC1 may be of various aspect ratios depending on each case.

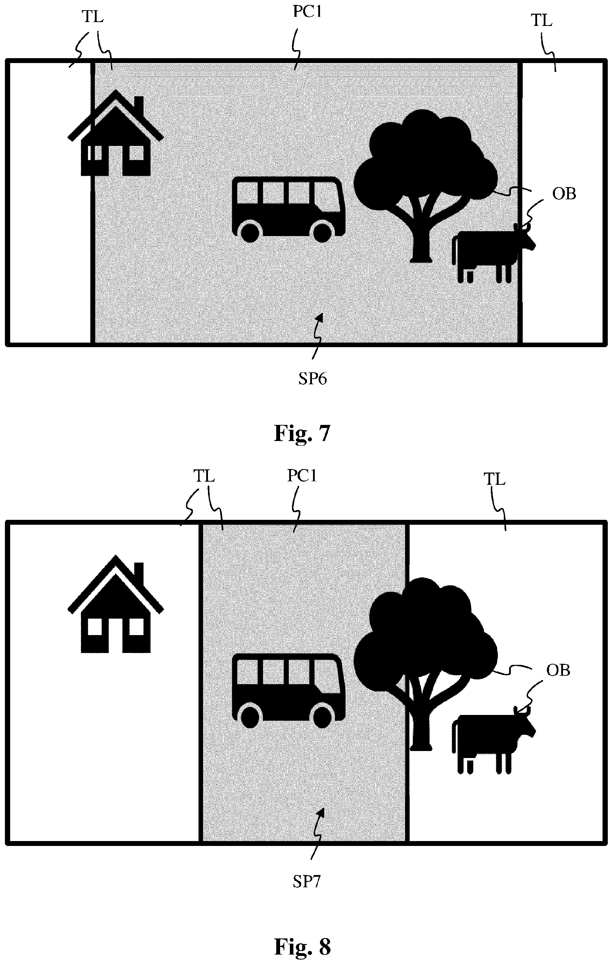

**Figure 7** schematically shows an exemplary embodiment where the video picture PC1 is spatially segmented into 3 picture tiles TL of different aspect ratios. The video picture PC1 may comprise a spatial section SP6 corresponding to the central picture tiles, which presents an aspect ratio closer to a square ratio than the one of the video picture PC1.

Following the above approach, different aspect ratios may be contemplated to accommodate different use-cases, for instance for changing aspect ratio orientation of video content or streaming for smartphones. An orientation change is schematically shown in the example of **figure 8** where the video picture PC1 (most suitable for rendering in horizontal displays), spatially segmented into 3 picture tiles TL, comprises a spatial section SP7 (more suitable for rendering in vertical displays) corresponding to the central picture tile having a different aspect ratio from the one of the video picture PC1.

Exemplary embodiments of the methods of the present application are now described here-below. The above description of the figures 3-8, notably with respect to the picture tiles TL and spatial sections SP, can apply likewise to the embodiments described below.

### Encoding

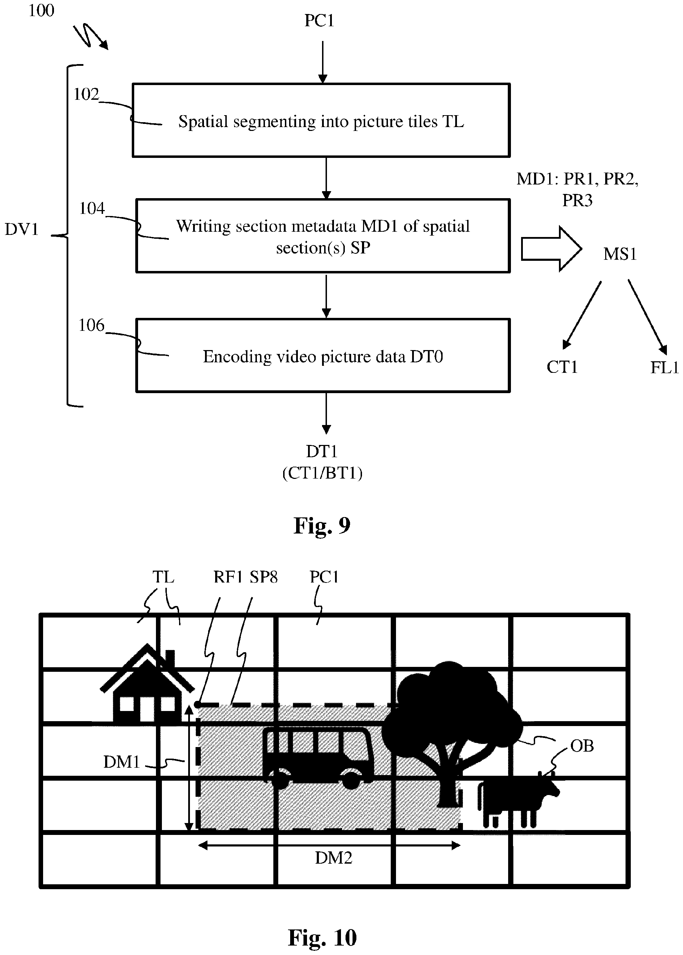

**Figure 9** schematically shows a schematic bloc diagram of steps 102-106 of a method 100 of encoding a video picture PC1, in accordance with at least one exemplary embodiment of the present invention. By way of an example, the video picture PC1 may the one represented in figures 3-8, although the nature of the video picture PC1 may be adapted as already indicated. The steps of the method 100 may be implemented by an encoder (or encoding apparatus or packager or transcoder) DV1, which is described in more detail later in particular exemplary embodiments.

In a segmenting step 102, the video picture PC1 is spatially segmented into a plurality of picture tiles TL having no intra-frame dependency. Partitioning in picture tiles may be performed, for instance, as described earlier with reference to any one of figures 3-8.

As previously explained, a slice is a sequence of one or more slice segments starting with an independent slice segment and containing all subsequent dependent slice segments (if any) that precede the next independent slice segment (if any) within the same picture. Spatial segmentation is performed in step 102 so that the picture tiles TL are independently decodable portions of the video picture PC1. This means that each tile TL can be decoded without coding dependency to any other tile TL of the video picture PC1. Tile boundaries may thus indicate a break in coding dependencies, including motion vector prediction, intra prediction and context selection.

In a writing step 104, section metadata MD1 of at least one spatial section SP is written (or incorporated) into a metadata structure MS1, where the nature of said metadata structure MS1 may be adapted depending on each case as described further below. This writing step 104 constitutes a signalling operation as will be further discussed below. The section metadata MD1 may define one or a plurality of spatial sections SP. The spatial section(s) SP may for instance be any one of spatial sections SP1-SP7 as described with reference to figures 3-8.

As already indicated, the spatial section(s) SP defined by the section metadata MD1 may represent the main content of the video picture PC1, that is, what may be considered as the most important (or more useful) content of the video picture PC1. More generally, the spatial section(s) SP may represent any content of interest, that is any sub-portion of the video picture PC1. The way the spatial section(s) SP is/are defined within the video picture PC1 may vary depending on each case and may be in particular adapted by a user.

By way of an example, it is assumed going forward that the section metadata MD1 define multiple spatial sections SP (e.g., SP2 and SP3 in figure 5 or SP4 and SP5 in figure 6), although other examples are possible where only one spatial section SP is defined.

Each spatial section SP comprises at least one picture tile TL of the video picture PC1. Various arrangements of the spatial sections SP are however possible. As shown for instance in figures 5-6, each spatial section SP may correspond to one or more picture tiles TL. In such a case, the tile(s) TL of each spatial section SP may be aligned with the borders of said spatial section SP. As described further below, other embodiments are possible where each spatial section SP as defined in the section metadata MD1 does not necessarily comply with the tile segmentation of the video picture PC1. A spatial section SP may for instance comprise at least part of picture TL1, such that the tile(s) TL of the spatial section SP does not align with the borders of said spatial section SP.

The section metadata MD1 define, for each spatial section SP, decoding properties PR2 of video picture data of the one or more picture tiles TL of the spatial section SP (figure 9). The section metadata MD1 may for instance indicate the presence of at least one spatial section representing a given content within the video picture PC1, for instance what is considered (e.g., by the picture's creator) as an area of interest, possibly a most essential part of the video picture PC1.

In a particular example, the section metadata MD1 further define, for each spatial section SP, a spatial area PR1 in the video picture PC1. The spatial area PR1 of each spatial section SP in the video picture PC1 may be defined in various manners depending on each case. The section metadata MD1 may for instance include tile identifiers of each tile TL of the corresponding spatial section SP. It should be noted, however, that embodiments are possible where the section metadata data MD1 do not define the spatial area PR1.

**Figure 10** shows an example where the video picture PC1, segmented in 25 picture tiles TL as in figures 5-6, comprises a spatial section SP8 which comprises one complete picture tile TL and only sub-parts of other picture tiles TL. The section metadata MD1 may define the spatial area PR1 of the spatial section SP8 based on at least one dimension (e.g., dimensions DM1 and DM2 as shown in figure 10) of the spatial section SP8 and a reference point RF1 indicating a position of the spatial section SP8 relative to the picture tiles TL of the video picture PC1. Based on the dimension(s), it is possible to identify the spatial section SP8 using the reference point RF1 (e.g., the top left corner) as a reference within the video picture PC1. This way of defining the spatial area PR1 of a spatial section SP can be used for instance if the spatial section SP at hand covers an area which does not match (or comply) with the tile segmentation performed in step 102. More flexibility in the way the spatial section is encoded can thus be achieved. During later decoding, the spatial section can be decoded while the remaining of the picture tiles TL can be ignored, thereby improving coding/decoding efficiency.

The decoding properties PR2 as defined in the section metadata MD1 define properties (or parameters) of the corresponding spatial section SP that can be later used to identify a video picture PC1 containing a compliant spatial section SP and at a decoding stage to decode said spatial section SP. These decoding properties PR2 may for instance define compliant interoperability points (e.g., profile, tier, level) and/or coding characteristics (e.g., resolution, bitrate, bit depth) of the one or more spatial sections of the video picture PC1. The nature of the decoding properties and the way they are defined in the section metadata MD1 may be adapted, some implementations being later described by way of examples.

The decoding properties PR2 (or more generally the section metadata MD1) of a spatial section MD may for instance comprise presentation features PR3 (figure 9) of video picture data of the one or more picture tiles of the spatial section MD.

The nature, configuration and use of the section metadata MD1, in particular of the decoding properties PR2 and presentation features PR3 (if any), will be more apparent from the exemplary embodiments described further below.

In a particular example, the spatial segmenting in step 102 is performed based on tile characteristics of at least one spatial section SP which is to be encoded. This allows adapting the way the video picture PC1 is spatially segmented depending on the spatial section(s) SP which is used for encoding (and later for decoding).

In an encoding step 106 (figure 9), video picture data DT0 of the picture tile(s) TL of the spatial sections SP are encoded into encoded video picture data DT1 according to the section metadata MD1 of the spatial sections MD1. In the present example, the video picture data DT0 are encoded (or encapsulated) into a container CT1 (also called first container) which may be of any appropriate form. The container CT1 may be one or more files, one or more network packets, or any binary structure that is able to contain a video bitstream. In other words, the encoded video picture data DT1 are produced by encoding, into the container CT1, the one or more picture tiles TL, contained (at least partially) in each spatial section SP of the video picture PC1 (as previously defined in step 104), according to the section metadata MD1 of said spatial section SP. To this end, video picture data DT0 of the relevant picture tiles may be obtained in any appropriate manner. The encoder DV1 may for instance extract the video picture data DT0 from a source bitstream or from any appropriate container or storing means.

The encoder DV1 may encode the video picture data D0 as a bitstream BT1 incorporating the encoded video picture data DT1 (figure 9), this bitstream BT1 being encapsulated (or incorporated) into the container CT1.

In a particular example, descriptive metadata defining the picture tiles TL of the video picture PC1 are incorporated into the container CT1, for instance in at least one ISO BMFF box and/or in at least one supplemental enhancement information (SEI) message.

In the encoding method 100 (figure 9), the structure metadata MS1 used for carrying (or storing, or transmitting) the section metadata MD1 may be of various nature. In a particular example, the structure metadata MS1 (or at least part thereof) may be comprised (or incorporated) in a separate descriptor file FL1, i.e, a descriptor file separate from the container CT1 comprising the encoded video picture data DT1. In a particular example, the structure metadata MS1 (or at least part thereof) may be comprised (or incorporated) in the container CT1. In a particular example, a first part of the structure metadata MS1 may be comprised (or incorporated) in a separate descriptor file FL1 and a second part of the structure metadata MS1 may be comprised (or incorporated) in the container CT1. The first and second parts may collectively form the structure metadata MS1.

The container CT1 and the metadata structure MS1 can then be transmitted to a client (a decoder) to decode (if necessary) the encoded video picture data DT1.

It should be noted that the writing step 104 (figure 9) may be performed before or after the encoding step 106. For instance, the video picture data DT0 may first be encoded and the section metadata MD1 is then written. Alternatively, the section metadata MD1 may be first written, and the video picture data DT0 are then encoded.

As further described later at the decoding stage, the encoding method 100 allows signalling support of at least one spatial section SP for decoding the encoded video picture data DT1 as well as decoding properties (e.g., compliance point(s), such as profile, tier and/or level) that can be used for the purpose of decoding. To this end, the metadata structure MS1 comprising the section metadata MD1 may be used at the decoding stage to detect that partial consumption (or access) to one or several spatial section(s) SP of the video picture PC1 can be achieved.

A concept of the present application thus resides in extending the current DASH syntax with additional information to indicate to clients that a video stream, or more generally a video picture, comprises at least one spatial section that can be consumed independently, where this at least one spatial section constitutes a lower compatibility point. This additional information, i.e., the section metadata MD1, can be signalled as already described in the form of a metadata structure MS1. The present application thus introduced a new signalling operation point that can be advantageously used to indicate spatial sections of specific decoding properties PR2 within a video picture PC1 or in a video stream. These alternative decoding properties PR2 of the spatial section CP can be signalled for instance either as a lighter codec profile or as a lower resolution. This additional information can be obtained in any appropriate manner at the decoding stage by extracting it from a metadata structure MS1 as described above, e.g., from the container CT1 and/or from a descriptor file separate from the container CT1, as will be described further below.

As an exemplary use-case, a high-quality content may be provided by a user using his/her mobile phone (or the like) for live streaming (e.g., using DASH). Because such devices have constrained resources (processing power, battery, etc.) it can usually be produced in only one quality, i.e., in one representation (e.g., single-representation MPD), and this should be the highest available. Producing more representations, enhancement layers, or using other techniques increase resource consumption and induces delays. This situation, however, is problematic as a client at the decoding stage may not be able to support the high quality of the content produced. Therefore, to be able to also support devices with lower specifications, the producer can perform encoding by implementing the encoding method 100. In particular, the content can be directly encoded using picture tiles TL, i.e., according to the section metadata MD1, and the second metadata MD1 can be signalled in a metadata structure MS1 as previously described in particular examples.

As another user-case, the encoding method 100 is also applicable to multi-party conferencing. A user may for instance record (or produce) a video content in high resolution using his/her mobile phone or the like. However, one or some participants to a multi-party conferencing session may be unable to support this high resolution. Accordingly, instead of providing a lower resolution to all the users, the producer can keep producing content in high resolution to be used by all possible participants, possibly by a majority, while the users with lower processing capabilities can still access a lower quality version of the content thanks to the present application, as will be described further below.

The present application thus allows to extend the range of supported devices for a given video content without extending the number of representations.

As already indicated, scalable video coding (SVC) can be performed for streaming video content for full or partial consumption (or access) by user applications (or users) of different specifications. SVC can offer the same content with different coding parameters in order to be able to support both powerful and light (less powerful) clients. Conventionally, SVC requires (at least) two different streams to be generated (and stored and delivered), one for the base layer and one (or more) for the enhancement layer(s). A dedicated system architecture and specific processing are thus required.

By implementing the encoding method 100, however, the picture tiles can be advantageously used at the encoding stage and signalling of the section metadata MD1 can be performed, so that only one version (or a limited number of versions) of the content may need to be encoded.

Further, the section metadata MD1 can be advantageously used at the decoding stage in at least two different ways. Firstly, the client can make an informed decision even before the decoding stage (e.g., at initialization) on whether the full or a lighter content version can be decoded and decide whether to download the video content. The client (or decoder) may thus decide, based on the section metadata MD1, to download or not download the video content depending on the available spatial section(s) in the encoded video picture data DT1. In this first case, signalling the section metadata MD1 in the descriptor file (e.g., a MPD) separate from the container CT1 can be particularly efficient.

Secondly, the client (or decoder) may download the video content (the encoded video picture data DT1) and decide which version of the video content to decode based on the section metadata MD1. The decision of which version to decode can be made in particular according to the spatial section(s) available in the video content. In this second case, signalling the section metadata MD1 in the container CT1 and/or in the bitstream BT1 can be particularly efficient.

The concept of the present application assumes significantly less infrastructure on the production end compared to the SVC approaches (production and distribution chain for only one stream). Additionally, already deployed systems can easily add support for the present application by configuring the encoders and introducing the signalling as discussed. Similarly, already deployed receiving device may be updated with a new software, for instance for repurposing a video bitstream that exceed its decoding capabilities to one matching it, since the repurposing does not need decoding and re-encoding but only rewriting bitstream syntax.

As already indicated, the section metadata MD1 may comprise, for each spatial section SP of the video picture PC1, the decoding properties PR2 that can be used by a client (or encoder) for the purpose of decoding. The content of these section metadata MD1 may be adapted for each case, some examples being provided for illustrative purpose further below.

In a particular example, the decoding properties PR2) of the section metadata MD1 define at least one codec parameter for decoding the spatial section(s) SP of the encoded video picture PC1.

In a particular example, the decoding properties PR2) of the section metadata MD1 define a resolution of the spatial section(s) SP.

In a particular example, the section metadata MD1 comprise at least one of:
- an identifier of the spatial section(s) SP;
- tile information indicating at least one picture tile TL of the spatial section(s) SP;
- a resolution of the spatial section(s) SP;
- area information defining the spatial area PR1 occupied by the spatial section(s) SP; and
- ratio information defining an aspect ratio of said spatial section SP.

Various embodiments of the encoding method 100 will now be described below. In the following, exemplary implementations of signalling the section metadata MD1 into the metadata structure MS1 at the writing step 104 (figure 9) will be described. Particular examples will be provided to show how DASH Part 1 (MPD) syntax and semantics (latest version available) can be modified in order to apply the present application.

### Section metadata MS1 in the container CT1

In an exemplary embodiment, in the writing step 104 (figure 9), the section metadata MD1 (or at least part thereof) are written (and thus comprised) in the container CT1. As a result of the encoding method 100, the container CT1 thus comprises the encoded video picture data DT1 (for instance in the form of a bitstream) in association with the section metadata MD1. In other words, the metadata structure MS1 carrying (or storing) the section metadata MD1 is incorporated (or encapsulated) into the container CT1 along with the encoded video picture data DT1. Various implementations of this exemplary embodiment are described herebelow.

The section metadata MD1 (or at least part thereof) may for instance be incorporated, or comprised, in a bitstream transformation descriptor (BTD) within the container CT1. To this end, a new descriptor may be introduced. Such a new BTD can be an attribute to a media presentation descriptor (MPD), i.e., an existing MPD element of a bitstream. In this case, the BTD may be defined at different levels of the MPD. The BTD does not have to be tied (or associated) to current assumptions and/or any conventional signalling.

The BTD can either be in the same descriptor as the main content of the video picture PC1 (e.g., in the same AdaptationSet) or a dedicated descriptor for the spatial section(s) (e.g., in an AdaptationSet containing/describing only the spatial section and its properties).

As already indicated, the section metadata MD1 may comprise, for each spatial section SP of the video picture PC1, the decoding properties PR2. In an exemplary embodiment, these decoding properties PR2 define at least one codec parameter for decoding the spatial section(s) SP of the video picture PC1. This at least one codec parameter may be of various nature depending on each case.

The at least one codec parameter may comprise for instance a codec identifier which identifies the codec(s) that can be used for decoding the spatial section(s) SP of the video picture PC1.

The at least one codec parameter may include a profile, level and/or tier of codec(s) (code PLT) that can be used for decoding the spatial section(s) SP of the video picture PC1. Thanks to the BTD, different configurations of encoders can thus be signaled.

In an exemplary embodiment, the decoding properties PR2 in the BTD may signal a given codec profile, e.g., a codec profile different from the one of the full video picture PC1. The BTD can be used as an attribute to an existing MPD element. An example of syntax for the new BTD is provided in table 1 below, where the "Common Attributes and Elements" semantics table is taken from DASH (it was selected in particular because it can be advantageously located either to an AdapatationSet, Representation or SubRepresentation level of the MPD, but either existing elements can be used instead):

**Table 1**

| Element or Attribute Name | Use | Description |
|---|---|---|
| *Common attributes and elements* | | |
| ... | ... | ... |
| @codecs | O | It specifies the codecs present within the Representation. The codec parameters may also include the profile and level information where applicable. |
| | | For segment formats defined in this document, this element may be present and the contents of this attribute may conform to either the simp-list or fancy-list productions of IETF RFC 6381:2011, subclause 3.2, without the enclosing DQUOTE characters. The codec identifier for the Representation's media format, mapped into the name space for codecs as specified in IETF RFC 6381:2011, subclause 3.3, may be used. |
| **@derivate_codecs** | O | **It specifies the codecs of the spatial section(s) that can be extracted from the bitstream of the Representation. The codec parameters may also include the profile and level information where applicable.** |
| | | **For segment formats defined in this document, this element may be present and the contents of this attribute may conform to either the simp-list or fancy-list productions of IETF RFC 6381:2011, subclause 3.2, without the enclosing DQUOTE characters. The codec identifier for the Representation's media format, mapped into the name space for codecs as specified in IETF RFC 6381:2011, subclause 3.3, may be used.** |

In a particular example, the derivative_codecs can be a comma-separated list of codecs that are supported by the respective element content.

An example of syntax of a MPD with derivative_codecs is provided in the table 2 below:

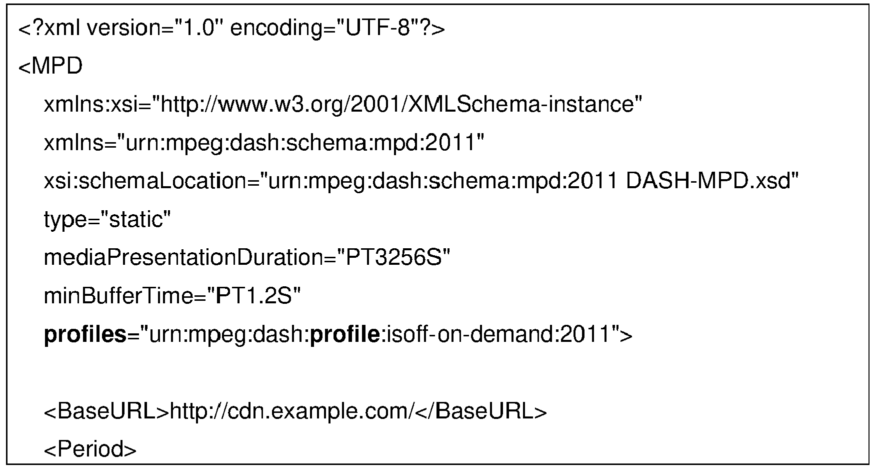

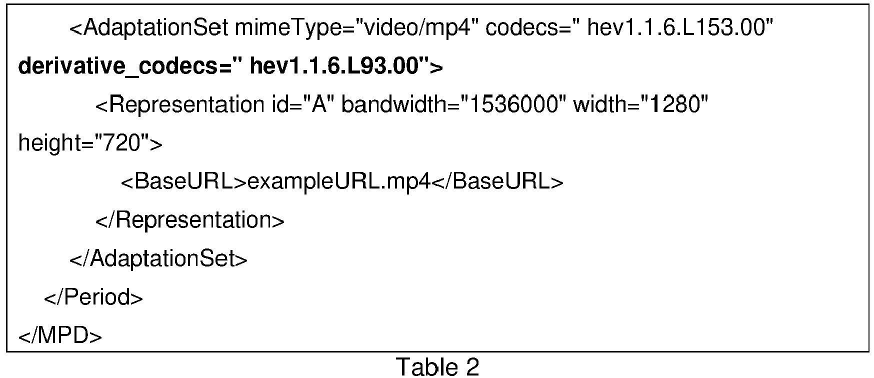

For example, in the above table 2 above, the main content has a @codecs value for HEVC for profile "Main", level 5.1 and tier "Main" (no Constraints) with value "hev1.1.6.L153.00" and has a spatial section for profile "Main", level 3.1 and tier "Main" (no Constraints) that may have the @derivative_codecs attribute value of "hevl . 1. 6. L93.00".

An aspect of the present application is to use existing coding (e.g. HEVC Tiles) and streaming (e.g. DASH MPD) constructs to extend the range of supported devices by adding support to lower-end clients for the same encoded video stream.

Spatial sections SP are smaller in resolution than the main content (i.e., the full video picture PC1), but the resolution may not be the only factor for selection. Most video codecs have different "profiles" (and "levels" and "tiers" in AVC/HEVC/VVC etc.) with different requirements (as in supported framerate, resolution, bitrate etc.). Therefore, having a spatial section SP with different resolution than the main content might lead the spatial section SP to be compatible to a different -more lightweight- profile. Since clients may decide on the support of the content by identifying the representations with compatible profiles, the respective profile of the spatial section(s) SP can be signaled in the section metadata MD1 possibly in association with the respective resolution of said spatial section(s) SP.

In an exemplary embodiment, the encoding properties PR2 of the metadata MD1 can define a codec of the spatial section(s) SP of the video picture PC1. In this manner, it can be indicated that a bitstream transformation is possible, for instance to transform the bitstream BT1 of encoded data DT1 (figure 9).

An example of syntax in the table 3 below shows the same example as in the example of table 2 using an optional property approach with a MPD using the BTD as a Supplemental property, that is SupplementalProperty of a "urn:mpeg:dash:btd:2022" BTD schema, to indicate a spatial section codec value (hev1.1.6.L93.00 instead of hev1.1.6.L153.00 for the main content):

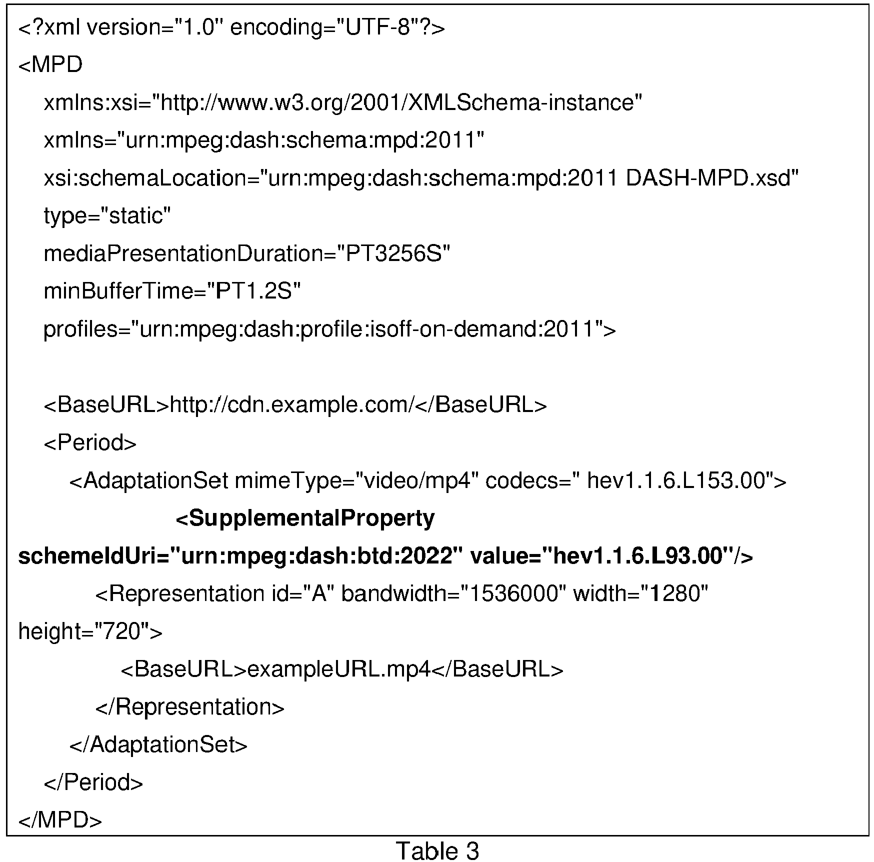

In an exemplary embodiment, the section metadata MD1 in the BTD comprises a flag indicating the existence of the spatial section(s) within the video picture PC1. This flag can be associated with at least one codec parameter as previously described, for instance as part of the decoding properties PR2. In this case, the client may need at the decoding stage to retrieve additional decoding information within the bitstream BT1.

In an exemplary embodiment, the section metadata MD1 of each spatial section SP comprise, in the BTD, at least one of:
- an identifier of said spatial section SP;
- tile information indicating at least one picture tile TL of said spatial section SP;
- a resolution of said spatial section SP;
- area information defining the spatial area PR1 occupied by the spatial section SP; and
- ratio information defining an aspect ratio of said spatial section SP.

An example of syntax of the BTD is provided below in the table 4:

**Table 4**

| **Element** | **Description** | **Notes** |
|---|---|---|
| **Spatial Section id** | Indicates the spatial section id | This can be used in particular in case there is more than one spatial section SP and/or the rest of the information of the section metadata MD1 is within the bitstream BT1. |
| **Tile ids** | Indicates the tiles that have to be decoded to achieve the spatial section | |
| **Resolution** | The resolution of the spatial section | This may be omitted in an implementation according to which one MPD element is used for each spatial section SP (element resolution may then be the same as the spatial section) |
| **Position** | Shows what area (of the original frame) is occupied by the spatial section | |
| **Aspect Ratio** | Indicates the aspect ratio of that spatial section | |

A plurality of descriptors per MPD element may be incorporated for defining section metadata MD1 of a plurality of respective spatial sections SP of the video picture PC1.

It should be noted that since the BTD is newly introduced according to particular embodiments of the present application, the mere presence of this descriptor in the metadata structure MS1 (figure 9) can already be interpreted by the client (or decoder) at, or prior to, the decoding stage as indicating that the spatial section functionality of the present application is implemented. In that case, a separate flag as described above may not be required to the extent that decoding properties PR2 are signalled in the section metadata MD1.

In an exemplary embodiment, the container CT1 into which are encoded the video picture data DT0 (step 106, figure 9) is a binary file, called ISO Base Media File Format (BMFF) file as defined in the standard ISO/IEC 14496-12 (coding of audio-visual objects - Part 12: ISO Base Media File Format). But other file instantiation may be used without any limit of the scope of the present application.

The metadata structure MS1 may thus be written (or incorporated) in an ISO BMFF file serving as the container CT1.

In a particular example, the metadata structure MS1 is written in the BTD which is comprised in an ISO BMFF file serving as the container CT1.

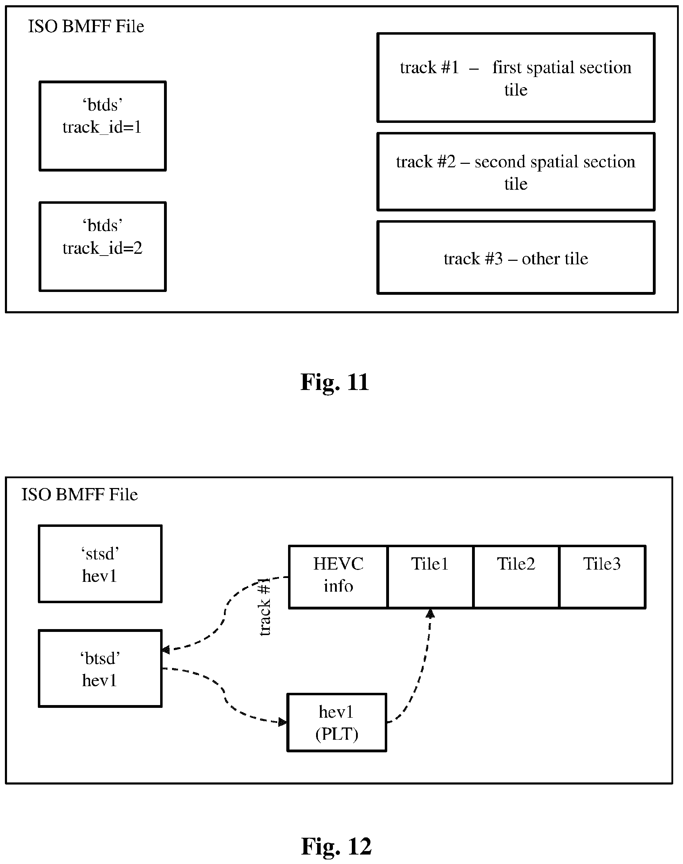

**Figure 11** schematically shows an example of an ISO BMFF file comprising the BTD (and thus the section metadata MD1).

As explained in the ISOBMFF specification, ISO BMFF files are formed as a series of objects, called boxes in this document. All data is contained in boxes; there is no other data within the file. This includes any initial signature required by the specific file format. ISOBMFF allows to store multiple sequence of consecutives samples (audio, video, subtitles, etc...) into the so-called track concept. Tracks are differentiated by their media handler.

In addition to the media handler and track references, ISO BMFF allows to store metadata defined in ISO/IEC 23002-2 as metadata item in the track.

In an exemplary embodiment, the video bitstream BT1 (figure 9) containing picture tiles TL can be stored in ISO Base Media File Format (ISO BMFF) tracks. To this end, track id(s) can be signalled (instead or alongside identifiers of the picture tiles TL). This new class may be added to the current ISOBMFF standard.

More specifically, the signalling of the section metadata MD1 can be performed using one of the two following options; the BTD is either (1) in the MPD (on a higher (presentation) level) or (2) in the ISO BMFF (on a lower (file format) level).

For the first above option (1), the BTD may comprise PLT (and/or resolution) information as shown for instance in the table 3 above, so the client at the decoding stage can be aware of the existence of spatial section(s) SP. Alternatively, a new attribute (e.g., @id) may be introduced that comprises the ISO BMFF track id(s) that contains the spatial section(s) SP. In either case, parsing the tile samples process (after fetching the content) can be the same.

For the second above option (2), the BTD may be placed in a box, for example with a new entry type 'btds' to indicate that the box contains a BTD. This box may be like a Sample Description Box ('stsd') for spatial section(s) SP.

**Figure 12** schematically shows an example of an ISO BMFF file which comprises a BTD bow 'btds' defining one spatial section SP.

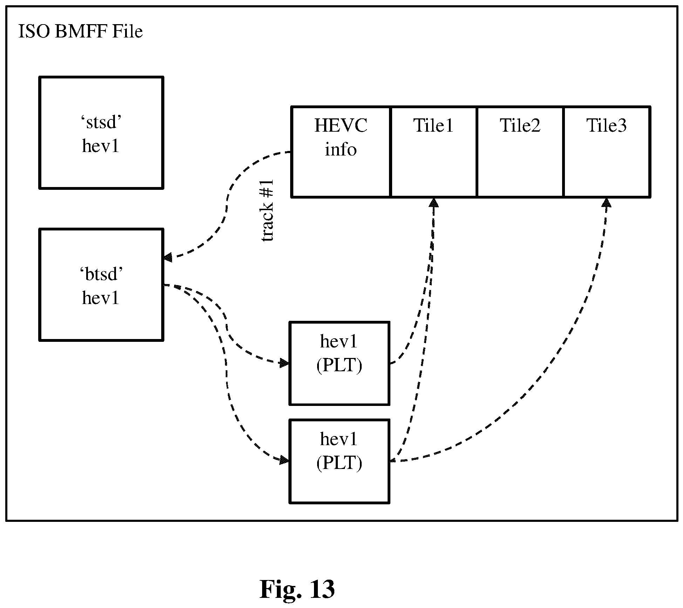

**Figure 13** schematically shows an example of an ISO BMFF file which comprises a BTD box 'btds' defining two spatial sections (a first one consisting of a tile TL and a second one consisting of two tiles TL).

An example implementation of a box that contains the BTS information could be as shown below in Table 5:

**Table 5**

| |
|---|
| ```
Definition
Box Types: 'btds'
Container: SampleTableBox
Mandatory: No
Quantity: Exactly one
 
The sample description table gives detailed information about the coding type
used, and any initialization information needed for that coding. The syntax of
the sample entry used is determined by either a format field (if present), the
media handler type, or both.
 
The information stored in the
BitstreamTransformationDescriptionBox after the entry-count is
both track-type specific as documented here, and can also have variants
within a track type (e.g. different codings may use different specific
information after some common fields, even within a video track).
 
Multiple descriptions may be used within a track.
 
Syntax:
aligned(8) class BitstreamTransformationDescriptionBox() extends FullBox ('btds', 0,
0){
   int i ;
   unsigned int(32) entry_count;
   for (i = 1 ; i <= entry_count ; i++){
       SampleEntry();           // an instance of a class derived from SampleEntry
}
 
Semantics:
entry count is an integer that gives the number of entries in the following table.
SampleEntry is the appropriate sample entry.
``` |

Within the 'btds', there could be the sample entries that comprise the bitstream of the spatial section SP.

This definition of the box can be extended to include other relevant parameters, like a group id (for the NALUs of the tile), spatial section width/height, spatial section position etc. Table 6 below shows an example of such a configuration box:

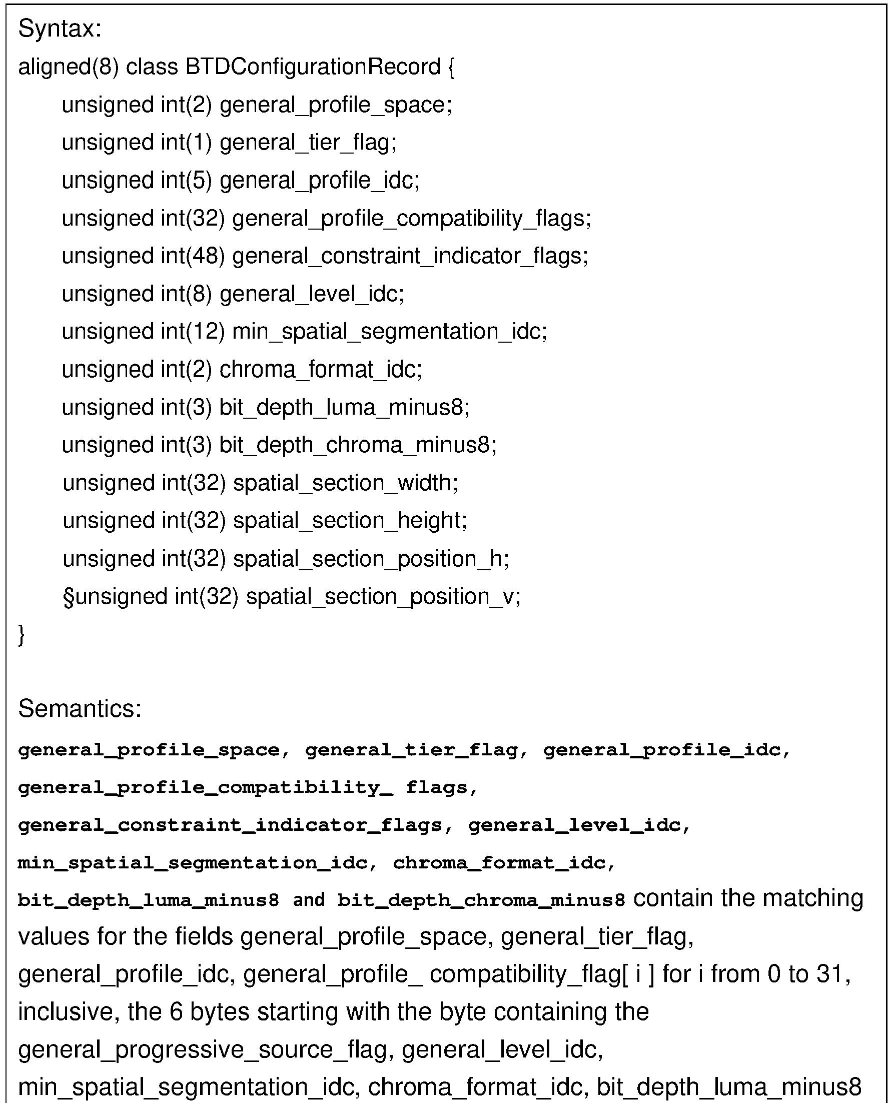

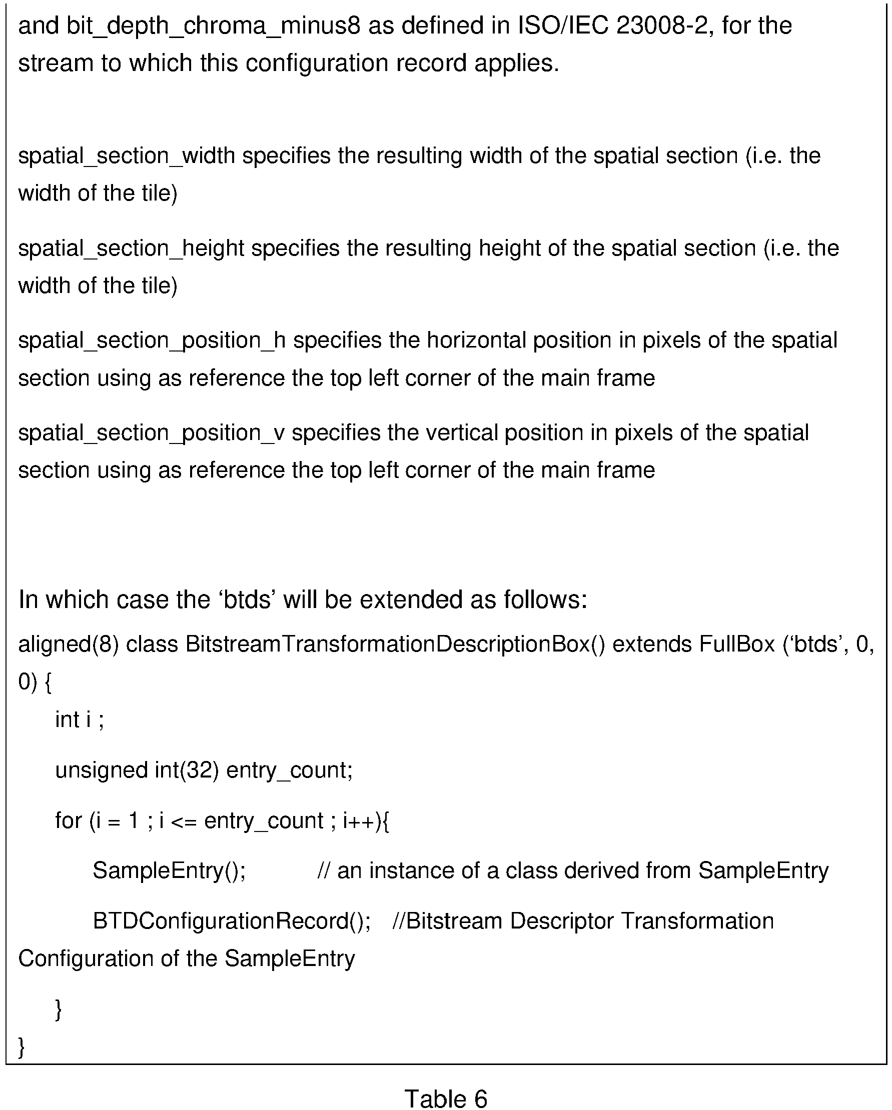

In either case of Tables 5 and 6, the PLT information may be stored in the HEVCConfigurationBox, which is part of the sample entry for HEVC (e.g., sample entry name 'hev1').

In a particular example, the btds box describes the spatial section position within the frame of the current track. The btds box does not describe the spatial relationship between the possible multiple tracks present in the same file.

Another way of using a single track encapsulation is by grouping the samples of a tile TL together. The different groups may be identified using the groupID and their details can be incorporated in a SampieGroupDescriptionBox. Therefore, the BTD may reference groups and the btds box may be extended to include the groupID that will be references by the respective NAL units since each NALU has a NALUMapEntry that indicates at which group it belongs.

In an exemplary embodiment, the content (e.g., the video picture PC1) arrives in a streaming service already packaged in a container CT1 (e.g., ISO BMFF) and it is to be prepared for streaming. The streaming service may extract the BTD from the file format metadata (e.g., from the ISOBMFF boxes) and, when creating the presentation descriptor (e.g., MPD), it inserts the section metadata MD1 into the presentation descriptor.

### Section metadata MS1 in a separate descriptor file

In an exemplary embodiment, in the writing step 104 (figure 9), the section metadata MD1 (or at least part thereof) are written in a separate descriptor file FL1, that is, a descriptor file separate from the container CT1. This descriptor file may refer (or point) to the container CT1.

As a result of the encoding method 100, the encoded video picture data DT1 may thus be comprised in the container CT1 while the section metadata MD1 are comprised in the separate descriptor file FL1. This descriptor file FL1 can then be transmitted to a client (or encoder), with or independently of the container CT1, for the purpose of decoding. As already indicated, the client may for instance detect, based on the section metadata MD1 incorporated in the descriptor file FL1, the presence of at least one spatial section SP in the encoded video picture PC1 and determine whether the encoded video picture data DT1 are to be decoded and/or how decoding the encoded video picture data DT1. Various implementations of this exemplary embodiment are described herebelow.

In a particular example, the descriptor file FL1 is a media presentation descriptor (MPD). This MPD may be of various nature. The descriptor file FL1 may for instance be a manifest file (e.g., in the case where the encoded video picture data DT1 is transmitting to the client by way of streaming).

In a particular example, the descriptor file FL1 defines location of (or identifies) one or more containers (also called second containers) including the container CT1. In other words, the descriptor file FL1 defines location of (or identifies) one or more containers within a group of at least one container, where the container CT1 is part of this group. In this case, the descriptor file FL1 may for instance comprise a respective identifier (e.g., an URL) for identifying each of said one or more containers of the group.

In a particular example, the descriptor file FL1 defines the section metadata MD1 and a respective location (or identifier) of one or more picture tiles TL of the spatial section(s) SP of the encoded video picture PC1.

Hybrid implementations are also possible where the section metadata MD1 are signalled to the client (or encoder) by using both the container CT1 and a separator descriptor file FL1 as described above. In an exemplary embodiment, a first part of the structure metadata MS1 may thus be comprised (or incorporated) in a descriptor file FL1 separate (or independent from) from the container CT1 and a second part of the structure metadata MS1 may be comprised (or incorporated) in the container CT1.

The first part of the section metadata MS1 (comprised in the descriptor file FL1) may for instance comprise a flag (as described earlier) to indicate the existence of at least one spatial section SP in the encoded video picture PC1. This flag makes the client (or encoder) aware that the spatial section functionality of the present invention is being implemented. The client may read or extract the rest of the section metadata MD1 (e.g., all or part of the decoding properties PR2) from the container CT1.

### Spatial sections

As already indicated, the picture tiles TL containing the spatial section(s) SP may be aligned with the borders of the spatial section(s) in the video picture PC1. However, this might not always be the case. In order to have better coding efficiency, larger tiles TL may be used, therefore a compromise between the size of the tiles and the quality of the image should be made. To provision for such cases, the spatial area PR1 as defined in the section metadata MD1 of each spatial section SP may indicate one or several dimensions (e.g., DM1 and DM2, see figure 10) of the spatial section SP as well as a reference point RF1 (e.g., the top left corner) from which the frame to be rendered should be measured.

As already described, the figure 10 illustrates such an example where 9 tiles TL at the centre of the video picture PC1 cover a larger area than the spatial section SP8. The dimensions DM1 and DM2 in association with the reference point RF1 (indicating a point in the video picture PC1) may thus be signalled as the spatial area PR1 in the section metadata MD1. Once the decoding is completed, the client may crop out and discard the area that is not rendered. In an exemplary embodiment, the main stream (e.g., bitstream BT1) contains a plurality of (semantical) views that are aligned with the tile borders, such that each tile TL may correspond for instance to one participant in a video conferencing call. Therefore, by signalling the existence of spatial sections SP aligned with the views of the receiving client, decoding requirements may be reduced, for instance by reducing the number of rendered views.

The same ability to signal derivative codecs properties from an original bitstream to new derivative ones can also be applied to real-time transport when the clients are negotiating the codecs for the communication session.

### Decoding

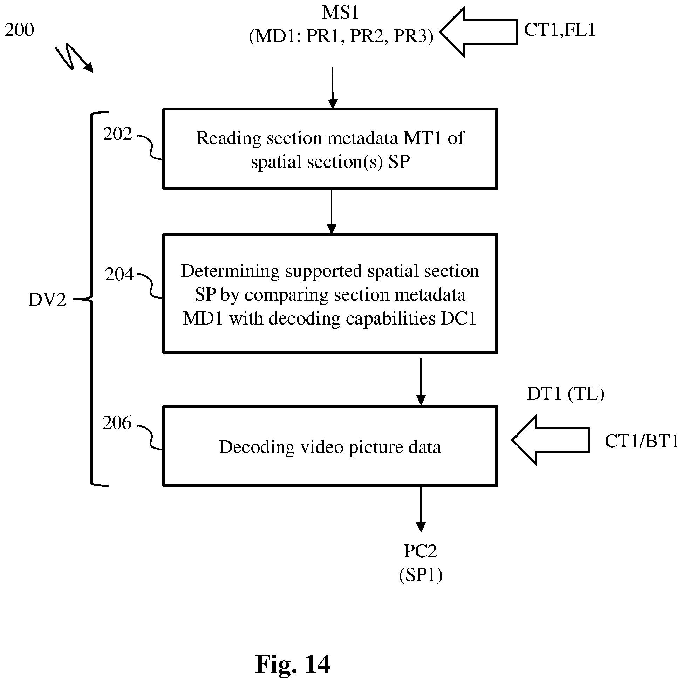

**Figure 14** shows a schematic bloc diagram of steps 202-206 of a method 200 of decoding a video picture PC1, in accordance with at least one exemplary embodiment of the present application. The steps of the method 200 may be implemented by any client, i.e., a media player (or decoder, or decoding apparatus) DV2, which is described in more detail later in particular exemplary embodiments. The media player DV2 may correspond to a reading application or to a computing device, for instance.

By way of an example, it is assumed that the media player DV2 implements the decoding method 200 to decode the encoded video picture data DT1 into a decoded video picture PC2. In the following, it is considered that the encoded video picture data DT1 is produced as output of the method 100 as previously described. Accordingly, all the information provided earlier with respect to the encoding method 100 may apply in an analogous manner to the decoding method 200 (figure 14).

In particular, the encoded video picture data DT1 comprises an encoded version of the video picture PC1. The decoded video picture PC2 constitutes a decoded version of the video picture PC1, which may correspond to all or part of the video picture PC1.

In a reading step 202, the section metadata MD1 of at least one spatial section SP of the video picture PC1 is read from the metadata structure MS1. As already indicated, each spatial section SP comprises at least one picture tile TL of the video picture PC1. The section metadata MD1 of each spatial section SP defines decoding properties PR1 of video picture data of said at least one picture tile TL of the spatial section SP.

All the relevant information provided earlier with respect to encoding, notably regarding the picture tiles TL, the spatial sections SP, the section metadata MD1, the metadata structure MS1 and the descriptor file FL1 (if any), may apply in an analogous manner for the decoding method 200.

In particular, the section metadata MD1 of each spatial section SP may also define a spatial area PR1 in the video picture PC1.

The metadata structure MS1 containing the section metadata MD1 may be provided to, or accessed by, the medial player DV2 in any appropriate manner.

In a determining step 204 (figure 14), a supported spatial section SP is determined (or identified) by comparing the section metadata MD1 of said at least one spatial section SP (i.e. the section metadata MD1 read in step 202) to decoding capabilities of the media player DV2. These decoding capabilities may define the type and/or characteristic(s) of video content (e.g., in terms of quality and/or resolution and/or profile) that the media player DV2 is capable of reading.

In a decoding step 206, the video picture data DT1 of at least one (e.g., one, a plurality or all) picture tile TL of said supported spatial section SP is decoded into the decoded video picture PC2. To this end, the video picture data DT1 may be extracted from the container CT1 (e.g., from the bitstream BT1) produced by the encoder DV1 according to the encoding method 100 (figure 9). The container CT1 may be provided to, or accessed by, the medial player DV2 by any appropriate manner.

Once the decoding 206 is completed, the media player DV2 may render the decoded video picture PC2 in any appropriate manner, for instance by displaying the corresponding video content on a display unit.

As already described, the metadata structure MS1 may be conveyed in various ways to the media player DV2. All or part of the metadata structure MS1 may be comprised in the container CT1. Alternatively, all or part of the metadata structure MS1 may be comprised in a separate descriptor file FL1. In a particular example, the metadata structure MS1 is partially comprised in a separate descriptor file FL1 and the rest is comprised in the container CT1. The media player DV1 may thus access and read the descriptor file FL1 (if any) to obtain all or part of the section metadata MD1. The media player DV2 may also extract all or part of the section metadata MD1 from the container CT1, e.g., from a bitstream transformation descriptor (BTD) within the container CT1.

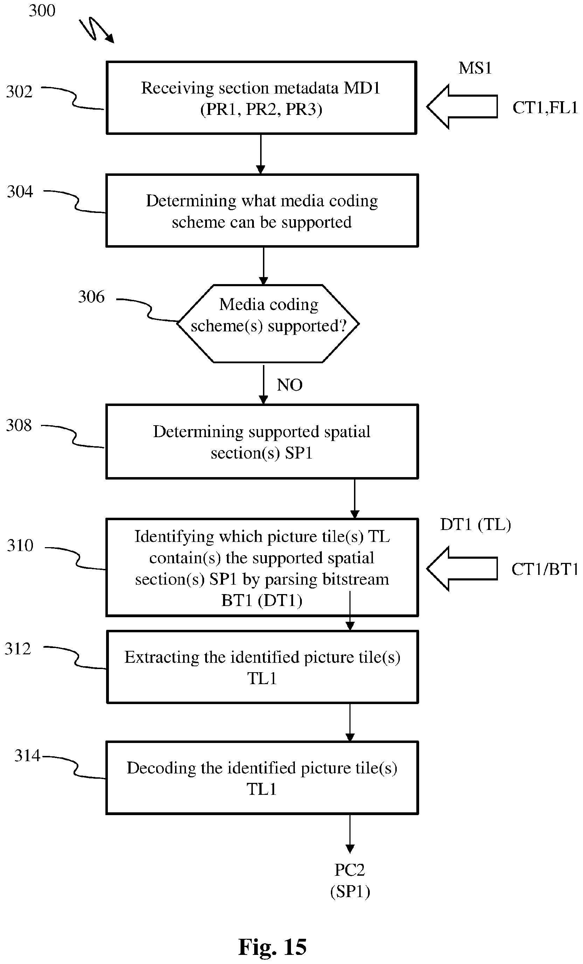

**Figure 15** schematically shows an exemplary implementation of the decoding method 200 implemented by the media player DV2 as previously described.

In a receiving step 302, the section metadata MD1 (comprising the spatial area PR1 and the decoding properties PR2 of at least one spatial section SP) are received. To this end, the section metadata MD1 may be extracted from the metadata structure MS1. The metadata structure MS1 can be independent from, or part of, the container CT1 of encoded video picture data DT1 as previously described.

In a determining step 304, it is determined what media coding scheme(s) can be supported by the media player DV2. To this end, the media player DV2 may for instance consult a non-transitory memory where the supported media coding scheme(s) are stored.

In a determining step 306, it is determined based on the result of the determining step 304 whether the media player DV2 supports a coding scheme for decoding the entire video picture PC1 (the main content thereof). To this end, the media player DV2 may compare the supported media coding scheme(s) identified in the determining step 304 with at least one coding scheme identified as allowing decoding of the full video picture PC1 based on the section metadata MD1.

If the media player DV2 supports a coding scheme for decoding the entire video picture PC1, the decoding method 300 ends and decoding may be pursued in any appropriate manner to decode the entire video picture PC1, thereby allowing full consumption of the content by the client.

If however the media player DV2 does not support any coding scheme for decoding the entire video picture PC1, the decoding method 300 carries on with the determining step 308 (figure 14) which corresponds to the determining step 204 (figure 14) as previously described.

In an identifying step 310, it is identified which picture tile(s) TL of the video picture PC1 contain(s) the supported spatial section(s) SP identified in step 308, by parsing the bitstream BT1 within the container CT1 as produced by the encoding method 100. To this end, the media player DV2 may obtain the bitstream BT1 in any appropriate manner. The media player DV2 may for instance fetch the bitstream BT1 as the stream with the most relevant spatial section(s) SP from a plurality of streams.

In an extracting step 312, the picture tile(s) TL identified in step 310 are extracted from the bitstream BT1 contained in the container CT1.

In a decoding step 314 (corresponding to the decoding step 206 in figure 14), the identified picture tile(s) TL are decoded into the decoded video picture PC2.

### System

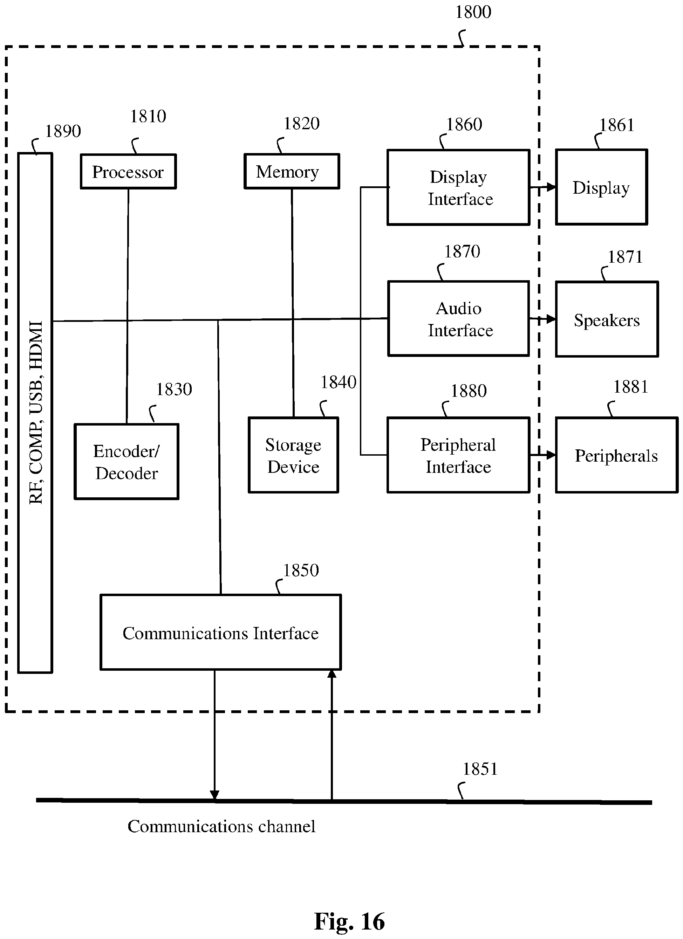

**Figure 16** shows a schematic block diagram illustrating an example of a system 1800 in which various aspects and exemplary embodiments are implemented.

System 1800 may be embedded as one or more devices including the various components described below. In various exemplary embodiments, system 1800 may be configured to implement one or more of the aspects described in the present application. For instance, the system 1800 is configured to perform an encoding method (e.g., encoding method 100) and/or a decoding method (e.g. decoding method 200 and/or 300), according to any one of the previously described exemplary embodiments. The system 1800 may thus constitute an encoder DV1 and/or a media player DV2 in the sense of the present application.

Examples of equipment that may form all or part of the system 1800 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 1800, singly or in combination, may be embodied in a single integrated circuit (IC), multiple ICs, and/or discrete components. For example, in at least one exemplary embodiment, the processing and encoder/decoder elements of system 1800 may be distributed across multiple ICs and/or discrete components. In various exemplary embodiments, system 1800 may be communicatively coupled to other similar systems, or to other electronic devices, via, for example, a communications bus or through dedicated input and/or output ports.

System 1800 may include at least one processor 1810 configured to execute instructions loaded therein for implementing, for example, the various aspects described in the present application. Processor 1810 may include embedded memory, input output interface, and various other circuitries as known in the art. System 1800 may include at least one memory 1820 (for example a volatile memory device and/or a non-volatile memory device). System 1800 may include a storage device 1840, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 1840 may include an internal storage device, an attached storage device, and/or a network accessible storage device, as non-limiting examples.

System 1800 may include an encoder/decoder module 1830 configured, for example, to process data to provide encoded/decoded video picture data, and the encoder/decoder module 1830 may include its own processor and memory. The encoder/decoder module 1830 may represent module(s) that may be included in a device to perform the encoding and/or decoding functions as previously described. As is known, a device may include one or both encoding and decoding modules. Additionally, encoder/decoder module 1830 may be implemented as a separate element of system 1800 or may be incorporated within processor 1810 as a combination of hardware and software as known to those skilled in the art.

Program code to be loaded onto processor 1810 or encoder/decoder 1830 to perform the various aspects described in the present application may be stored in storage device 1840 and subsequently loaded onto memory 1820 for execution by processor 1810. In accordance with various exemplary embodiments, one or more of processor 1810, memory 1820, storage device 1840, and encoder/decoder module 1830 may store one or more of various items during the performance of the processes described in the present application. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 1810 and/or the encoder/decoder module 1830 may be used to store instructions and to provide working memory for processing that may be performed during encoding and/or decoding in accordance with the present application.

In other exemplary embodiments, however, a memory external to the processing device (for example, the processing device may be either the processor 1810 or the encoder/decoder module 1830) may be used for one or more of these functions. The external memory may be the memory 1820 and/or the storage device 1840, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 1800 may be provided through various input devices as indicated in block 1890. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 1890 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 1800 to other electronic devices across USB and/or HDMI connections. It is to be understood that various aspects of input processing, for example, Reed-Solomon error correction, may be implemented, for example, within a separate input processing IC or within processor 1810 as necessary. Similarly, aspects of USB or HDMI interface processing may be implemented within separate interface ICs or within processor 1810 as necessary. The demodulated, error corrected, and demultiplexed stream may be provided to various processing elements, including, for example, processor 1810, and encoder/decoder 1830 operating in combination with the memory and storage elements to process the data stream as necessary for presentation on an output device.

Various elements of system 1800 may be provided within an integrated housing. Within the integrated housing, the various elements may be interconnected and transmit data therebetween using suitable connection arrangement 1890, for example, an internal bus as known in the art, including the I2C bus, wiring, and printed circuit boards.

The system 1800 may include communication interface 1850 that enables communication with other devices via communication channel 1851. The communication interface 1850 may include, but is not limited to, a transceiver configured to transmit and to receive data over communication channel 1851. The communication interface 1850 may include, but is not limited to, a modem or network card and the communication channel 1851 may be implemented, for example, within a wired and/or a wireless medium.

Data may be streamed to system 1800, in various exemplary embodiments, using a Wi-Fi network such as IEEE 802.11. The Wi-Fi signal of these exemplary embodiments may be received over the communications channel 1851 and the communications interface 1850 which are adapted for Wi-Fi communications. The communications channel 1851 of these exemplary embodiments may be typically connected to an access point or router that provides access to outside networks including the Internet for allowing streaming applications and other over-the-top communications.

Other exemplary embodiments may provide streamed data to the system 1800 using a set-top box that delivers the data over the HDMI connection of the input block 1890.

Still other exemplary embodiments may provide streamed data to the system 600 using the RF connection of the input block 1890.

The streamed data may be used as a way for signalling information, such as section metadata MD1 (as described earlier), used by the system 1800. The streamed data may constitute or comprise all or part of the metadata structure MS1 carrying the section metadata DT1.

As previously described, signalling may be accomplished in a variety of ways. For example, one or more syntax elements, flags, and so forth may be used to signal information to a corresponding decoder in various exemplary embodiments.

System 1800 may provide an output signal to various output devices, including a display 1861, speakers 1871, and other peripheral devices 1881. The other peripheral devices 1881 may include, in various examples of exemplary embodiments, one or more of a stand-alone DVR, a disk player, a stereo system, a lighting system, and other devices that provide a function based on the output of system 1800.

In various exemplary embodiments, control signals may be communicated between the system 1800 and the display 1861, speakers 1871, or other peripheral devices 1881 using signalling such as AV.Link (Audio/Video Link), CEC (Consumer Electronics Control), or other communications protocols that enable device-to-device control with or without user intervention.

The output devices may be communicatively coupled to system 1800 via dedicated connections through respective interfaces 1860, 1870, and 1880.

Alternatively, the output devices may be connected to system 1800 using the communications channel 1851 via the communications interface 1850. The display 1861 and speakers 1871 may be integrated in a single unit with the other components of system 1800 in an electronic device such as, for example, a television.

In various exemplary embodiments, the display interface 1860 may include a display driver, such as, for example, a timing controller (T Con) chip.

The display 1861 and speaker 1871 may alternatively be separate from one or more of the other components, for example, if the RF portion of input 1890 is part of a separate set-top box. In various exemplary embodiments in which the display 1861 and speakers 1871 may be external components, the output signal may be provided via dedicated output connections, including, for example, HDMI ports, USB ports, or COMP outputs.

In figures 1-16, various methods are described herein, and each of the methods includes one or more steps or actions for achieving the described method. Unless a specific order of steps or actions is required for proper operation of the methods, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device.

Processors also include communication devices.

Additionally, the methods may be implemented by instructions being performed by a processor, and such instructions (and/or data values produced by an implementation) may be stored on a computer readable storage medium, such as storage device 1840 (figure 16) for instance. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 1810 or by hardware, or by a combination of hardware and software. As a non-limiting example, the exemplary embodiments may be also implemented by one or more integrated circuits. The memory 1820 may be of any type appropriate to the technical environment and may be implemented using any appropriate data storage technology, such as optical memory devices, magnetic memory devices, semiconductor-based memory devices, fixed memory, and removable memory, as non-limiting examples. The processor 1810 may be of any type appropriate to the technical environment, and may encompass one or more of microprocessors, general purpose computers, special purpose computers, and processors based on a multi-core architecture, as non-limiting examples.

As will be apparent to one of ordinary skill in the art based on the present application, implementations may produce a variety of signals formatted to carry information that may be, for example, stored or transmitted. The information may include, for example, instructions for performing a method, or data produced by one of the described implementations. For example, a signal may be formatted to carry the bitstream of a described exemplary embodiment.

Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present exemplary embodiments/examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video picture (including possibly a received bitstream which encodes one or more video picture) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application, for example,

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video picture in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signalling) a particular parameter to the decoder so that the decoder may use the same particular parameter. Conversely, if the decoder already has the particular parameter as well as others, then signalling may be used without transmitting (implicit signalling) to simply allow the decoder to know and select the particular parameter. By avoiding transmission of any actual functions, a bit savings is realized in various exemplary embodiments. It is to be appreciated that signalling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method (100) of encoding a video picture (PC1), the method comprising:
- spatially segmenting (102) the video picture into a plurality of picture tiles (TL) having no intra-frame dependency;
- writing (104), in a metadata structure (MS1), section metadata (MD1) of at least one spatial section (SP), each spatial section comprising at least one picture tile of the video picture, the section metadata of each spatial section defining decoding properties (PR2) of video picture data of said at least one picture tile of the spatial section; and
- encoding (106), into a container (CT1), video picture data (DT0) of the at least one picture tile of said at least one spatial section according to the section metadata (MD1) of the at least one spatial section (SP).

2. A method (200; 300) of decoding a video picture (PC1) implemented by a media player (DV2), said video picture being segmented into a plurality of picture tiles (TL) having no intra-frame dependency, said method comprising:
- reading (202), from a metadata structure (MS1), section metadata (MD1) of at least one spatial section (SP), each spatial section comprising at least one picture tile (TL) of the video picture, the section metadata of each spatial section defining decoding properties (PR2) of video picture data of said at least one picture tile of the spatial section;
- determining (204) a supported spatial section (SP) by comparing the section metadata (MD1) of said at least one spatial section to decoding capabilities of the media player (DV2); and
- decoding (206), from a first container, video picture data (DT1) of at least one picture tile of said supported spatial section.

3. The method of claim 2, wherein the section metadata of said at least one spatial section (SP) defines a spatial area (PR1) in the video picture.

4. The method of claims 3, wherein the spatial area (PR1) is defined, by the section metadata (MD1), based on at least one picture tile of the video picture.

5. The method of claim 3 or 4, wherein the spatial area (PR1) is defined by the section metadata (MD1) of said at least one spatial section (SP) based on at least one dimension of said spatial section and a reference point indicating a position of said spatial section relative to the picture tiles of the video picture.

6. The method of any of claims 2 to 5, wherein at least part of the metadata structure is comprised in a descriptor file separate from, and referring to, the first container.

7. The method of claim 6, wherein the descriptor file is a media presentation descriptor (MPD).

8. The method of claims 6 or 7, wherein the descriptor file defines location of one or more second containers including said first container.

9. The method of any of claims 6 to 8, wherein the descriptor file defines the section metadata (MD1) and location of one or more picture tiles (TL) of said at least one spatial section (SP).

10. The method of any one of claims 2 to 5, wherein at least part of the metadata structure is comprised in the first container.

11. The method of claim 10, wherein the section metadata (MD1) is comprised in at least one of:
- in a bitstream transformation descriptor incorporated into the first container; and
- in metadata information of the first container

12. The method of any one of claims 6 to 11, wherein a first part of the metadata structure is comprised in a descriptor file separate from, and referring to, the first container,
said first part of the metadata structure comprising a flag indicating the existence of said a least one spatial section within said video picture,
wherein a second part of the metadata structure is comprised in the first container.

13. The method of any one of claims 2 to 12, wherein the decoding properties (PR2) of the section metadata define at least one codec parameter for decoding said at least one spatial section.

14. The method of any one of claims 2 to 13, wherein the section metadata (MD1) comprise at least one of:
- an identifier of said at least one spatial section;
- tile information indicating at least one picture tile of said at least one spatial section;
- a resolution of said at least one spatial section;
- area information defining the spatial area occupied by said at least one spatial section; and
- ratio information defining an aspect ratio of said at least one spatial section.

15. The method of any one of claims 2 to 14, wherein the first container (CT1) is an ISO BMFF file.

16. A data structure (MS1) formatted to include section metadata (MD1) obtained from the method of claim 1.

17. An apparatus (DV1) for encoding a video picture (PC) into a bitstream (BT1) of encoded video picture data (DT1), the apparatus comprising means for performing the method of claim 1.

18. An apparatus (DV2) for video decoding a video picture (PC1) from a bitstream (BT1) of encoded video picture data (DT1), the apparatus comprising means for performing one of the methods claimed in any one of claims 2 to 15.

19. A computer program product including instructions which, when the program is executed by one or more processors, causes the one or more processors to carry out one of the methods claimed in any one of claims 1 to 15.

20. A non-transitory storage medium carrying instructions of program code for executing one of the methods claimed in any one of claims 1 to 15.
